# EUROPÄISCHE PATENTSCHRIFT

(11) **EP 2 543 643 B1**
(45) Veröffentlichungstag und Bekanntmachung des Hinweises auf die Patenterteilung: **18.05.2016**
(21) Anmeldenummer: 12175580.5
(22) Anmeldetag: 09.07.2012
(51) Int. Cl.: C02F 11/12, F26B 11/02

(54) **UNIVERSALE DOPPELWANDIGE TROCKNUNGSANLAGE**
INSTALLATION DE SECHAGE UNIVERSELLE A DOUBLE PAROI
UNIVERSAL DOUBLE WALL DRYING ASSEMBLY

(30) Priorität: 07.07.2011 DE 102011106891
(43) Veröffentlichungstag der Anmeldung: 09.01.2013
(73) Patentinhaber: Cakir, Toren, 71277 Rutesheim (DE)
(72) Erfinder: Cakir, Toren, 71277 Rutesheim (DE)
(74) Vertreter: Jakelski & Althoff Patentanwälte PartG mbB

(56) Entgegenhaltungen:
- EP-A2- 0 829 457
- DE-A1- 3 831 270
- FR-A- 1 111 680
- GB-A- 1 405 740

## Beschreibung

Die vorliegende Erfindung betrifft eine Anlage zum Trocknen von organischen Abfallprodukten, somit kann auf einer solchen Anlage ein Verfahren insbesondere zum Trocknen von Klärschlämmen aus den öffentlichen, kommunalen und industriellen Abwasserreinigungsanlagen (Kläranlagen) durchgeführt werden.

### Stand der Technik

Im Allgemeinen ist es bekannt, dass der Trocknungsprozess von mit höherem Flüssigkeitsanteil (z. B. mehr als 20 % Gewichtsanteilen versetzte Flüssigkeit, insbesondere mit einem Festsubstanzanteil von weniger als 50 % wie z. B. nur noch von 35 %) versetzten Wertstoffen ein energie- und kostenintensives Problem darstellt. Trotzdem ist die Trocknung generell verlockend, denn durch die Trocknung entsteht neben einer einhergehenden Gewichts- und Volumenreduktion ein langfristig lagerfähiges und heizwertreiches Trockengut, das zum Beispiel als Sekundärbrennstoff einsetzbar ist.

Zur Ausstattung bestehender und zukünftig zu bauender Kläranlagen gibt es unterschiedliche Trocknungsverfahren, die sich verfahrenstechnisch und nach Art der Wärmeübertragung unterscheiden und vor allem für die Klärschlammtrocknung eingesetzt werden:
(1): Bei der **Konvektions- oder Direkttrocknung** kommt das zu trocknende Material unmittelbar mit dem Wärmeträger in Berührung. Das Trocknungsgas (z. B. Verbrennungsgas, Luft oder Brüden mit Temperaturen bis zu 850 °C) umbzw. überströmt das getrocknete Material.
   Zur Konvektions- und Direkttrocknung gehören Band-, Kaltluft-, Centridry-, Etagen-, Trommel-, Wirbelschicht-, Strom- und Mahltrockner.
(2): Bei der **Kontakttrocknung** erfolgt die Wärmeübertragung über eine beheizte Kontaktfläche, die Wärmeaustauschfläche. Das getrocknete Material wird zuerst erwärmt, ohne mit dem Wärmeträger in den Kontaktflächen (z. B. Verbrennungsgas, Luft, Dampf, Druckwasser oder Thermoöl mit Temperaturen bis zu 250 °C) in Berührung zu kommen.

Zu der Kontakttrocknung gehören Dünnschicht-, Rohrbündel-, Drehrohr- und Scheibentrockner. (3): Bei der **Solar- bzw. Strahlungstrocknung** wird das zu trocknende Material in einer Art Gewächshaus ausgebreitet und durch die Sonnenenergie getrocknet, indem das verdunstete Wasser mittels Ventilatoren aus dem System ausgeschleust wird. Drei solare Trocknungsverfahren - Ist-Verfahren, Thermo-System-Verfahren und Ratus-Verfahren - konnten sich bis heute auf dem Markt durchsetzen.

Es sei noch auf die Patentschriften DE 10 2004 036 081 B4 (veröffentlichter Patentinhaber: Cakir, U.; Anmeldetag: 24.07.2004), DE 10 2006 054 566 B3 (veröffentlichter Patentinhaber: Cakir, U.; Anmeldetag: 20.11.2006) und DE 10 2007 055 445 B4 (Patentinhaberin: Cakir, Toren; Anmeldetag: 20.11.2007) und auf die Offenlegungsschrift DE 10 2008 039 005 A1 (Patentinhaberin: Cakir, Toren; Anmeldetag: 21.08.2008) verwiesen. Die genannten Druckschriften beschreiben einzelne Aspekte zu einem Trocknungsverfahren; sie können daher als Detailinformationen zu Einzelaspekten der nachfolgend beschriebenen Trocknungsanlage betrachtet werden. Die Referenzen dienen zur Darlegung von grundlegenden Begriffen, von Bedeutungen, von möglichen Ausführungsformen von Einzelteilen und von Zusammenhängen zu nachfolgend beschriebener Anlage.

Die Dokumente GB1405740 und EP0829457 offenbaren weitere aus dem Stand der Technik bekannten Trocknungsanlagen.

### Aufgabestellung

Die vorliegende Erfindung widmet sich dem Ziel, eine einfach aufgebaute, robuste und kostengünstige Trocknungsanlage vorzustellen.

### Allgemeine Erfindungsbeschreibung

Aufgrund der Ausnutzung der diversen Abwärmen für die Trocknung gilt die vorliegende Erfindung sowohl als ökologisch und als auch als ökonomisch. Damit leistet die vorliegende Erfindung einen wichtigen Beitrag zum Umweltschutz.

Die Trocknungsanlage greift nach einem Prinzip auf die Erkenntnis zurück, dass vor allem Abwärme für die Trocknung einsetzbar ist, insbesondere wird in einer vorteilhaften Ausführungsform für die Trocknung des zu trocknenden Feststoffes wie z. B. für die Trocknung eines organischen Abfallprodukts leicht umzuleitende, mit anderen Worten, generell im Umfeld zur Verfügung stehende, Abwärme genutzt. Als Energiequelle, von der die Abwärme bezogen wird, bieten sich zahlreiche Energiequellen an.

Eine der folgenden Energiequellen kann als Hauptenergiequelle genutzt werden:
- Gebläsedruckluftenergie, deren Ursprung auf bzw. in der Kläranlage liegt
- Abwasserwärmenutzug aus dem gereinigten Abwasser, deren Ursprung auf bzw. in der Kläranlage liegt und mindestens eine der folgenden Energiequellen:
   - Energieerzeugungsanlagen (Blockheizkraftwerk und Mikrogasturbine etc.)
- Heizwasser
- Gasbrenner
- Solarkollektoren
- Prozessabwärme aus der Produktion oder thermischen Prozessen (Verbrennungsanlagen, Zementwerke, Pyrolyseanlagen und Biogasanlagen etc.)

Weitere Energiequellen, insbesondere aus zuvor dargelegter Liste, können als Hilfsenergiequellen hinzugenommen werden.

Die Trocknungsanlage wird für das Trocknen von organischen Abfallprodukten genutzt.

Zu den organischen Abfallprodukten werden die folgenden zu trocknenden Feststoffe gezählt, nämlich Klärschlämme aus öffentlichen, kommunalen und/oder industriellen Abwasserreinigungsanlagen, die verkürzt auch als Kläranlagen bezeichnet werden. Die Trocknungsanlage reduziert den Wasser- bzw. Feuchtigkeitsanteil in dem zu trocknenden Feststoff. Die Trocknungsanlage sorgt für eine Verringerung des Flüssigkeitsanteils im Feststoff. Sie kann auch mit einer einfachen Modifikation für die Trocknung der folgenden Produkte eingesetzt werden:
- Biomasse (Holzhackschnitzel, Sägespäne, Grünschnitte, Biertreber, Obsttrester, Gärreste, Futtermittel und Küchen- und Gemüseabfälle)
- Produktionsrückständen aller Art
- Aufbereitungsreststoffen aller Art
- nasse Granulate aller Art etc.

Zu der Kategorie der Biomassen werden u. a. Holzhackschnitzel, Sägespäne, Grünschnitte, Biertreber, Obsttrester, Gärreste, Futtermittel und Küchen- und Gemüseabfälle gezählt. Die Trocknungsanlage eignet sich, solche Biomassen wie Holzhackschnitzel, Sägespäne, Grünschnitte, Biertreber, Obsttrester, Gärreste, Futtermittel und Küchen- und Gemüseabfälle zu trocknen.

Die vorliegende Erfindung umfasst folgende Trocknungsschritte:
(a) Vortrocknung (Schnecken-Trocknung)
(b) Haupttrocknung (Trommel-Trocknung)
(c) Nachtrocknung (Container-Trocknung)

Beim Trocknungsprozess wird das Medium Luft, das aus der Umgebung entzogen und mittels einer oder in Kombination von folgenden Energiequellen oder ihre Abwärme(n) aufgewärmt wird, als Prozessluft verwendet:
- Gebläsedruckluftenergie auf Kläranlagen
- Abwasserwärmenutzung aus dem gereinigten Abwasser auf Kläranlagen und mindestens eine der folgenden Energiequellen
   - Energieerzeugungsanlagen:
      - Blockheizkraftwerk (BHKW)
      - Mikrogasturbine
- Heizwasser
- Gasbrenner
- Solarkollektoren
- Prozessabwärme aus der Produktion oder thermischen Prozessen (Verbrennungsanlagen, Zementwerke, Pyrolyseanlagen und Biogasanlagen etc.)

Die universale, doppelwandige Trocknungsanlage zum Trocknen insbesondere von Klärschlämmen aus den öffentlichen, kommunalen und industriellen Abwasserreinigungsanlagen (Kläranlagen), zum Trocknen von Biomassen (Holzhackschnitzel, Sägespäne, Grünschnitte, Biertreber, Obsttrester, Gärreste, Futtermittel und Küchen- und Gemüseabfallreste), zum Trocknen von Produktionsrückständen aller Art, zum Trocknen von Aufbereitungsreststoffen aller Art und zum Trocknen von nassen Granulaten aller Art liefert ein in seinem TS-Gehalt frei einstellbaren Feststoff. Beim Trocknungsprozess wird das Medium Luft, die Luft wird hierbei aus der Umgebung entzogen und mittels einer oder in Kombination von mehreren Energiequellen oder ihren Abwärme aufgewärmt, als Prozessluft verwendet.

In der Trocknungsanlage wird ein Trocknungsprozess in drei Schritten vollzogen:
a. Vortrocknung (hierzu eignet sich besonders gut eine Schnecken-Trocknung)
b. Haupttrocknung (hierzu eignet sich besonders gut eine Trommel-Trocknung) und
c. Nachtrocknung (hierzu eignet sich besonders gut eine Container-Trocknung).

In der Trocknungsanlage wird das Drehen des Trommelmischers aufgrund einer Berührung der Zahnräder mit Bolzen ermöglicht. Dies stellt - insbesondere aufgrund geringen Schlupfes - eine besonders energieeffiziente Antriebsweise dar.

In der Trocknungsanlage wird der Trommelmischer in einer vollen Umdrehung in Rotation gebracht und die Pausenzeit des Trommelmischers kann an die spezifischen Eigenschaften der verschiedenen Materialien u. a. die Materialeigenschaften der Klärschlamme angepasst werden.

In der Trocknungsanlage sind die Messdosen unterhalb des Trommelmischers installiert. Mit ihrer Hilfe werden die Füllmenge und das Gesamtgewicht des zu trocknenden Feststoffs wie des Klärschlamms bestimmt. Aufgrund der Gewichtbestimmung unterhalb des Trommelmischers kann die Verteilung des Materials des Feststoffs im Trommelmischer direkt beobachtet werden.

In der Trocknungsanlage werden die Luftmenge, die Lufttemperatur und die Luftfeuchtigkeit an drei Stellen (vor dem Trommelmischer, nach dem Trommelmischer und nach dem Container-Ausgang) für die Bestimmung des Trockensubstanzgehalts (TS-Gehalt) systematisch gemessen. Dadurch kann der Trocknungsgrad so kontrolliert werden, dass jeder gewünschte TS-Gehalt möglich wird.

In der Trocknungsanlage wird die aufgewärmte Prozessluft aufgrund des doppelwandigen Aufbaues des Trommelmischers zum einen direkt auf das zu trocknende Material des Feststoffs (Direkttrocknung), zum anderen unterhalb des zu trocknenden Materials des Feststoffs eingeblasen (Kontakttrocknung). Deshalb vergrößert sich die gesamte getrocknete Fläche deutlich, sodass die aufgewärmte Prozessluft effektiv und wirkungsvoll ausgenutzt werden kann.

In der Trocknungsanlage reicht die Luftverteiler-Vorrichtung, auf der einige speziellen Düsen für die Prozessluftverteilung installiert sind, durchgehend von der Öffnung bis zum Ende des Trommelmischers. Dadurch kommt die aufgewärmte Prozessluft mit der gesamten Oberfläche des zu trocknenden Materials in Berührung.

In der Trocknungsanlage sind drei Fördersysteme für die Mischung und/oder Entleerung des getrockneten Materials des Feststoffs, des Trockengutes vorgehalten und ein trapezförmiges Sieb für das Durchströmen der Luft im Containerboden ist installiert.

In der Trocknungsanlage wird die Prozessluft und die Umluft mittels bzw. über zwei(er) Schieber in eine obere Öffnung und eine untere Öffnung des luftdichten und gekapselten Containers eingeblasen. Oben und unten wird aufgrund der Aufbaurichtung im Vergleich zu einem Boden bestimmt.

In der Trocknungsanlage sind mehrere Rüttler und Fördersysteme unterhalb des trapezförmigen Siebes für die Mischung des im Container angehäuften Materials installiert.

In der Trocknungsanlage fängt das unterhalb des trapezförmigen Siebs installierte Fördersystem den in der Umluft vorhandenen Staub und die Leichtstoffe ab. Ein solches Filtersystem sorgt dafür, dass der Staub und die Leichtstoffe vom System entfernt werden.

Im Vergleich zu den bisher bekannten Anlagen und Verfahren zeichnet sich die vorliegende Erfindung durch zahlreiche Vorteile aus. Wird die vorliegende Erfindung gegenüber den bisher bekannten und herkömmlichen Trocknungsverfahren betrachtet, so hat sie, je nachdem welches bisher bekannte Verfahren betrachtet wird, zumindest einige der folgenden Vorteile:
- geringere Investitionskosten
- keine Geruchsbildung
- Trocknungsleistung von klimatischen Bedingungen unabhängig
- geringer Arbeits- und Wartungsaufwand
- kein zusätzlicher Flächenbedarf
- kein zusätzliches Personal
- homogene Produktqualität
- staubfreie Trocknung bis 95 % TS-Gehalt (Trockensubstanz-Gehalt)
- keine zusätzliche Gebäude oder Bauwerke
- vollautomatischer Betrieb der Trocknungsanlage
- wenig Energieverbrauch
- keine Verleimung
- keine Installation eines Filtratwassersammelbehälters oder -beckens
- keine Ex-Anlage (explosionsgefährdete Anlage)
- keine Abkühlung des Trockengutes etc.

Gegenüber den Anlagen nach den Patentschriften DE 10 2004 036 081 B4, DE 10 2006 054 566 B3 und DE 10 2007 055 445 B4 und der Offenlegungsschrift DE 10 2008 039 005 A1 kann die vorliegende Erfindung einige Verbesserungen, die vor allem die Leistung der Trocknungsanlage deutlich steigern, vorweisen. Sie entwickelt die zuvor genannten Anlagen und Anlagenteile nach den Patentschriften DE 10 2004 036 081 B4, DE 10 2006 054 566 B3 und DE 10 2007 055 445 B4 und nach der Offenlegungsschrift DE 10 2008 039 005 A1 sowie die auf diesen Anlagen zu betreibenden Trocknungsverfahren weiter. Zu den Änderungen, die ein Verbesserungspotential ausweisen, können vor allem die Einsatzmöglichkeiten der verschiedenen Energiequellen, die Trocknungsmöglichkeit der diversen Materialien, geänderte Luftzirkulation für die Trocknung im gesamten System, vollständige maschinentechnische Änderungen und schließlich Änderungen der Messtechnik für die Trockensubstanzgehaltbestimmung gezählt werden.

### Ausführungsbeispiel

Die vorliegende Erfindung kann noch besser verstanden werden, wenn Bezug auf die beigefügten Figuren genommen wird, die einige, aber nicht alle möglichen erfindungsgemäße Ausführungsformen, beschreiben. Somit ist zumindest eine bevorzugte Ausführungsform der Erfindung beispielhaft in den Figuren dargestellt.
**Fig. 1** zeigt die Übersichtzeichnung mit den möglichen einsetzbaren Energiequellen und Luftströmen einer Trocknungsanlage.
**Fig. 2** zeigt eine geeignete Trocknungsanlage im Detail.
**Fig. 3a und 3b** zeigen einen Schnitt der Entleerungsvorrichtung vom Trommelmischer zum Trocknungscontainer (a) und einen Schnitt durch den Containerboden mit der Materialhäufung (b).
**Fig. 4** zeigt einen Schnitt durch die Drehvorrichtung des Trommelmischers und des darunter liegenden Zahnrades.

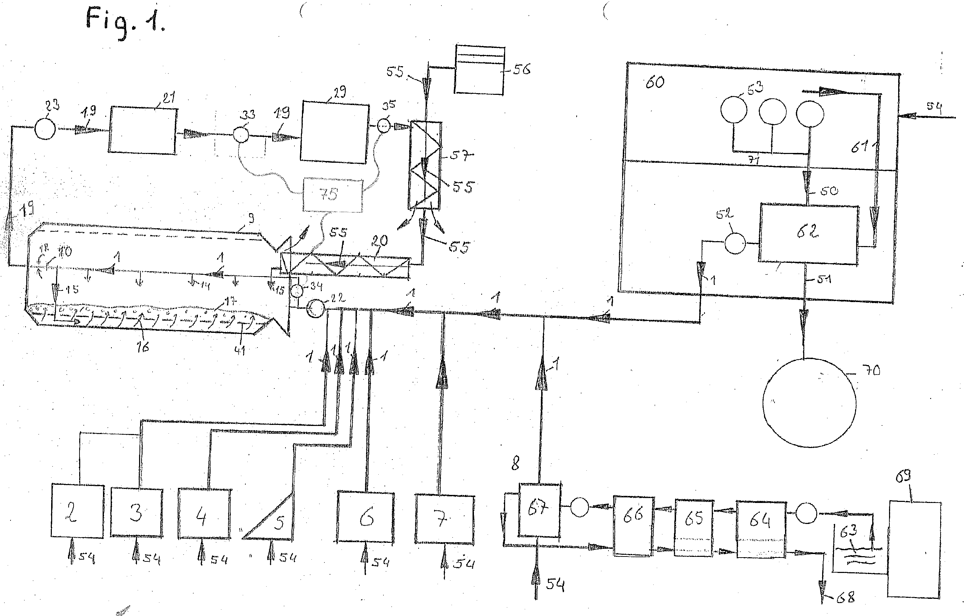

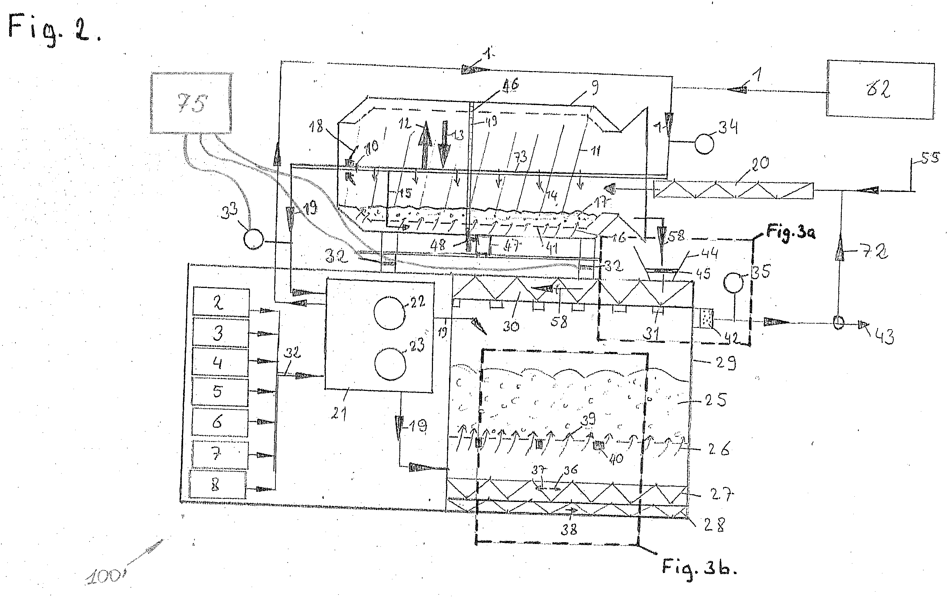

**Fig. 1** **und** **Fig. 2** zeigen das gesamte Trocknungskonzept mit der Vortrocknung (Schnecken-Trocknung), der Haupttrocknung (Trommel-Trocknung) und der Nachtrocknung (Container-Trocknung) besonders für Klärschlammtrocknung, wobei die Trocknungsanlage mit einer einfachen Modifikation für die Trocknung der anderen Produkte (Biomassen, Produktionsrückstände, Aufbereitungsreststoffe und nasse Granulate etc.) eingesetzt werden kann.

In **Fig. 1** wird die Trocknungsanlage 100 gezeigt. In **Fig. 2** wird eine Modifikation einer Trocknungsanlage als Trocknungsanlage 100' gezeigt.

Das Verfahrenschema für die Klärschlammtrocknung ist wie folgt beschrieben: Jede Kläranlage mit dem Belebschlammverfahren benötigt für die Aktivität der Mikroorganismen Sauerstoff im Belebungsbecken **70.** Um den nötigen Sauerstoff in das Belebungsbecken **70** einzublasen, ist ein Gebläseraum **60,** in dem je nach Größe der Kläranlage ein oder mehrere Gebläse **53** untergebracht sind, in jeder Kläranlage vorhanden. Die Gebläse **53** saugen den frischen Sekundärluftstrom in der Form als Außenluft **54** an, verdichten und pressen die Luft 1 durch ein Leitungssystem bzw. Luftleitungen **50** in das Belebungsbecken **70.** Bei diesem Verdichten und Reiben der Luft erhitzt sich die angesaugte Luft stark und erhöht dadurch ihre Temperatur in der Luftleitung **50** deutlich. Diese Luftleitung **50** kann mit anderen Energiequellen einzeln oder in Kombination, wie zum Bespiel mit der Blockheizkraftwerk-Abwärme **2,** der Mikrogasturbine **3,** Heizwasser **4** (mittels eines Wärmetauschers, Wasser/Luft), Solarkollektor **5** (Solar Energie), Gasbrenner **6,** Prozessabwärme **7** aus der Produktion oder aus thermischen Prozessen (z. B. Verbrennungsanlagen, Zementwerke, Pyrolyseanlagen und Biogasanlagen etc.) und Abwasserwärme **8** verbunden werden.

Bei der Ausnutzung der Gebläsedruckluftenergie, die bis zu 95 % zurück gewonnen werden kann, wird der von außen angesaugte Sekundärluftstrom in der Form als Außenluft **54,** der als Sekundärluftstrom **61** im Gebläseraum **60** durch die Strahlungswärme der Gebläse **53** vorgewärmt wird, quer zum heißen Primärluftstrom **71** der Gebläse **53** im Wärmetauscher (Luft/Luft) **62** vorbeigeführt. Dabei wird dem heißen Primärluftstrom **71** Wärme entzogen, ohne dass sich die beiden Luftströme vermischen. Die aufgewärmte Prozessluft **1** wird anschließend mittels eines Gebläses **22** in den Trommelmischer **9** für die Klärschlammtrocknung eingeleitet, während der abgekühlte Primärluftstrom **71** über die Luftleitung **51** ins Belebungsbecken **70** eingeleitet wird.

Neben der Ausnutzung der Gebläsedruckluft bietet die Abwasserwärme 8 aus dem gereinigten Abwasser des Kläranlage-Auslaufs, dessen Temperatur im Jahresdurchschnitt zwischen 8 und 20 °C schwingt, ein großes Wärmepotential an. Dieses Wärmepotential soll auch nach der vorliegenden Erfindung als Energiequelle für die Klärschlammtrocknung eingesetzt werden.

Die Wärmeentnahme aus dem Kläranlage-Auslauf hat im Gegensatz zum Kläranlage-Zulauf folgende Vorteile:
- große und konstante Wassermenge
- große nutzbare Temperaturdifferenz
- Anlage, insbesondere Trocknungsanlage 100, 100' weniger anfällig auf Verschmutzungen

Im Abwasser steckt eine große Wärmemenge, die mit speziellen Wärmetauschern aus dem gereinigten Abwasser gewonnen und mittels der Wärmepumpe zum Beispiel zur Klärschlammtrocknung genutzt werden kann.

Pro 1 m³ kann dem Abwasser pro Kelvin (absolute Temperatur) 1,16 kW Wärme entzogen werden. Bei einer angenommenen Jahresarbeitszahl (JAZ) von 5 kann eine Wärmepumpe damit 1,45 kW produzieren. Eine JAZ von 5 bedeutet, dass zur Erzeugung von fünf Teilen thermischer Nutzungsenergie nur ein Teil Strom für den Antrieb der Wärmepumpe eingesetzt werden muss. Vier Teile der Nutzenergie stammen aus dem gereinigten Abwasser.

Das Wärmepotential des Abwassers soll mit einem Beispiel erläutert werden: Der Jahresabwasservolumenstrom des gereinigten Abwassers soll 1,0 Mio. m³/Jahr (2.740 m³/Tag bzw. 114 m³/Stunde) betragen. Das ist die Abwassermenge, die der Abwassermenge einer Kläranlage mit ca. 12.000 Einwohnerwert (EW) entspricht. Aus dieser Menge kann pro Stunde und pro Kelvin 132 kW Wärme aus dem gereinigten Abwasser entzogen werden. Eine Wärmepumpe liefert bei einer Jahresarbeitszeit von z. B. 5 bei einer Abkühlung von z. B. 1 Kelvin eine Wärmeleistung von 165 kW. Demnach könnte die aus dem gereinigten Abwasser gewonnene jährliche Wärmemenge 1.450 MWh betragen.

Mit dieser Wärmemenge könnten ca. 2.000 t entwässerter Klärschlamm mit einem TS-Gehalt von 25 % auf 90 % TS-Gehalt bei einer angenommenen Wasserverdampfung von 1.000 kWh/t getrocknet werden. Aufgrund gewisser Verluste und unkontrollierbarer Wärmemengenabgaben lassen sich diese theoretischen Werte in der Regel nicht vollständig erreichen, eine gute Annäherung ist aber möglich.

Die grob schematische Darstellung der Nutzung der Abwasserwärme **8** aus dem gereinigten Abwasser ist in der Fig. 1 wiedergegeben. Das aus dem Nachklärbecken **69** entnommene Abwasser wird zuerst in einen Pumpenschacht **63** im Auslauf der Kläranlage geleitet. Von dort wird das Wasser über Filterplattenwärmetauscher **64** auf den Verdampfer der Wärmepumpe **65** zugeführt. Anschließend soll das für den Trocknungszweck aufwärmte Wasser in einem Speicher **66** gelagert werden. Je nach Bedarf soll das aufwärmte Wasser aus dem Speicher **66** entnommen und durch den Wärmetauscher (Wasser/Luft) **67** eingeleitet werden. Dabei entzieht der von außen angesaugte Sekundärstrom in der Form als Außenluft **54** dem aufgewärmten Wasser Wärme. Während die aufgewärmte Prozessluft **1** in den Trommelmischer **9** für die Trocknung eingeleitet wird, wird das abgekühlte Abwasser in den Vorfluter **68** eingeleitet.

Unabhängig von der Art der eingesetzten Energiequelle verläuft der Trocknungsprozess in der dargestellten Ausführungsform nach der vorliegenden Erfindung wie folgt weiter:

Der bis zu 35 % Trockensubstanzgehalt (TS-Gehalt) entwässerte Klärschlamm **55** wird nach einem Entwässerungssystem **56** (wobei als Entwässerungssystem **56** solche Systeme wie eine Siebbandpresse, eine Kammer- und Membranfilterpresse, eine oder mehrere Zentrifugen und eine Schneckenpresse infrage kommen), d. h., nachdem ein Entwässerungssystem 56 durchlaufen wurde, mittels eines Fördersystems **57** in den Trockenmischer **9** eingebracht. Die aufgewärmte Prozessluft **1** und die Umluft **19** mit dem Wasserdampf und dem Staub oder die Abluft **72** wird in die untere Öffnung (Lufteintritt) des Fördersystems **57** eingeblasen oder optional wird die Abluft **43** abgelassen. Während der Förderzeit kommen die entwässerten Klärschlammkörner **55** mit der Prozessluft **1,** der Umluft **19** und der Abluft **72** in Kontakt, so dass die Oberflächen der Klärschlammkörner **55** vorgetrocknet werden und somit eine Vortrocknung (Schnecken-Trocknung) stattfindet. Vorteile der Vortrocknung sind zum einen die Verbesserung und die Energieeinsparung der darauf folgenden Haupttrocknung (Trommel-Trocknung) und zum anderen Verminderung der Klebrigkeit und der Verleimung.

Die aufgewärmte Prozessluft **1** strömt durch eine Luftverteilervorrichtung **73,** die die Trommel von der Öffnung bis zum Ende umfasst und an der einige speziellen Luftverteilersysteme **14,** wie zum Beispiel Düsen angebracht sind, durch bzw. raus und damit kommen die kompletten Klärschlammoberflächen mit der Prozessluft **1** im Trommelmischer **9** in Berührung. Der Trommelmischer **9,** in dem die Haupttrocknung stattfindet, besteht aus einer Doppelwand, die mit einem Sieb **41** ausgestattet ist. Das Sieb **41** hat die Eigenschaft, dass sich die Feststoffe nicht absetzen können, während ein Teil der aufgewärmten Prozessluft **15** das Sieb **41** durchströmen kann. Ein Teil der aufgewärmten Prozessluft **15** wird durch das Sieb **41** in die Doppelwand hinein geblasen. Mit der hinein geblasenen Luft **16,** die durch das Sieb **41** in den teils getrockneten Klärschlamm **17** durchdringt, kann eine gezielte und effektiv vergrößerte Trocknungsfläche erreicht werden. Das Ende **10** der Luftverteilervorrichtung **73** an dem sich der Zuluftbereich endet und der Umluftbereich **18** (feuchte Luft) beginnt, ist blind. An dem Umluftbereich **18** befinden sich Öffnungen **14,** die die Umluft **19** ansaugen und mit Hilfe eines Gebläses oder Ventilators **23** unter den Nachtrocknungscontainer **29** fördert.

Unter dem Trommelmischer **9** befinden sich vier Messdosen **32** (zwei vorne und zwei hinten), mit deren Hilfe die Klärschlammfüllmenge und auch das Gewicht des teils getrockneten Klärschlamms **17** bestimmt werden kann. Nach dem Befüllen des Klärschlamms **55** dreht sich der Trockenmischer **9** in die Mischrichtung **12** nach einem abgestimmten Steuerungsprogramm. Nach dem Befüllen des Klärschlamms **55** wird der Trommelmischer **9** nur in einer bestimmten Zeit (1 bis 600 Sekunden, angepasst an die spezifischen Eigenschaften der verschiedenen Klärschlämme) in einer vollen Umdrehung in Rotation gebracht. Danach beginnt eine spezial ermittelte Pausezeit (1 bis 900 Sekunden) für eine volle Umdrehung der Rotation. Während der Pausezeit (Stillstand des Trommelmischers) wird die aufgewärmte Prozessluft **1** weiterhin kontinuierlich sowohl in den Trommelmischer **9** als auch in die Doppelwand des Trommelmischers **9** eingeblasen, wodurch die Klärschlammkörner **17** beiderseitig effektiv getrocknet werden können. Dadurch wird das Zusammenbacken der teils getrockneten Klärschlammkörner **17** verhindert und gleichzeitig die für die Klärschlämme charakteristische Leimphase überwunden. Da der Klärschlamm **17** im erwärmten Trockenmischer **9** kontinuierlich mit der Prozessluft **1** durchgemischt wird, entweicht das entzogene Wasser aus dem Klärschlamm **17** in Form von Wasserdampf **19,** der mit Staub mit Hilfe eines Ventilators **23** nach dem Verlassen des isolierten Containers **29** entweder durch einen Filter **42** wieder zurück in die Einfüllöffnung des Fördersystems **20** im Kreislauf geführt oder optional als Abluft **43** abgeführt wird. Damit schließt sich die während des Klärschlammsbefüllens beginnende Haupttrocknung (Trommel-Trocknung) ab. Während der Entleerphase wird das Gewicht des teils getrockneten Klärschlamms **17** mittels der Messdosen **32** ermittelt.

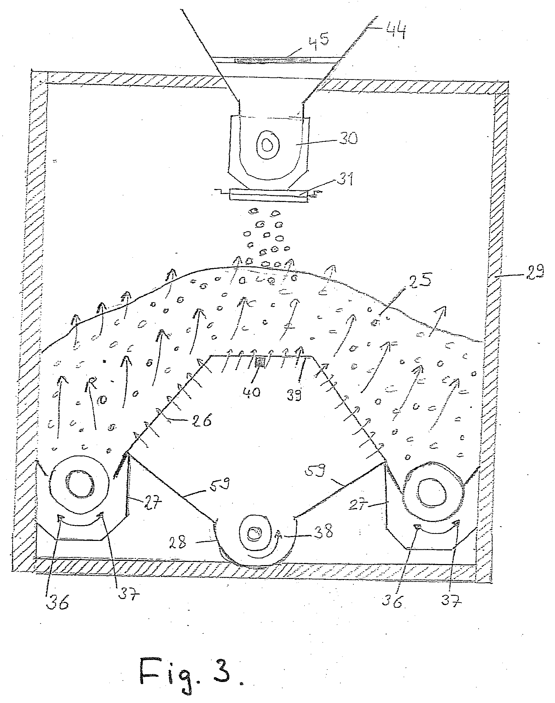

Der durch die Haupttrocknung granulierte Klärschlamm **58** (Granulat) entleert sich einfach durch das Ändern der Drehrichtung **13** des Trommelmischers **9** (Entleerrichtung) mittels der im Trommelmischer **9** installierten Spiralbleche **11** in den darunter liegenden isolierten Nachtrocknungscontainer **29.** Dabei öffnet sich die Klappe oder der Schieber **45** der Entleerungsvorrichtung **44** automatisch (für weitergehende Details wird auf **Fig. 3a** verwiesen).

Nach der Entleerung des Trommelmischers **9** beginnt die Nachtrocknung im isolierten Container (Container-Trocknung), während der Trommelmischer **9** mit neuem Material beschickt wird. Während der Haupttrocknung strömen die Prozessluft **1** und die aus dem hinteren Bereich der Trommel entzogene feuchte Umluft **19** von der oberen Öffnung des Containers **29** und/oder der unteren Öffnung des Containers **29** in den luftdichten und gekapselten Container **29** durch den granulierten Klärschlamm **58** ein. Das Einströmen der Prozessluft **1** und der Umluft **19** in den isolierten Container **29** wird mittels einer Luftvorrichtung **21** ermöglicht.

Im Containerboden befinden sich drei Fördersysteme **27** und **28,** zwei am Außenrand und eine zwischen den beiden, und ein trapezförmiges Sieb **39** mit mehreren Rüttlern **40.** Die beiden am Außenrand liegenden Fördersysteme **27** haben die Aufgabe, den im Container **29** befindenden Klärschlamm **25** zu mischen und zu entleeren, während das dritte Fördersystem **28** unterhalb des trapezförmigen Siebes Staub und Leichtstoffe abfängt und vom System entfernt (um in Details zu gehen, siehe **Fig. 3b****).**

Das Trockengut kann mittels eines Fördersystems in den bereitgestellten Container oder in Silos für die thermische Verwertung gefördert werden.

Der Prozessablauf wird durch eine Steuervorrichtung **75** (nicht eingezeichnet), die z. B. ein Computerleitsystem sein kann, bestimmt. Die Steuervorrichtung **75** kann auf Aktuatoren wie Motoren, Schieber **31, 45,** eine Entleerungsvorrichtung **44** und Fördersysteme **28, 30** einwirken, deren Drehzahl verändern und den Betrieb von solchen Komponenten regeln.

**Fig. 3a** zeigt einen Schnitt durch die Entleerungsvorrichtung **44** vom Trommelmischer **9** zum Nachtrocknungscontainer **29.** Die Entleerung des granulierten Klärschlamms wird dadurch ermöglicht, indem die Drehrichtung des Trommelmischers **9** geändert wird. Während der Entleerung öffnet sich die Klappe bzw. der Schieber **45** der Entleerungsvorrichtung **44** automatisch. Unter der Entleerungsvorrichtung **44** befindet sich ein Fördersystem **30** und darunter ein einstellbarer Schieber **31.** Die Aufgabe des Fördersystems **30** und des einstellbaren Schiebers **31** ist getrockneter Klärschlamm effektiv und gleichmäßig im Nachtrocknungscontainer **29** zu verteilen.

**Fig. 3b** zeigt einen Schnitt des Nachtrocknungscontainerbodens **29** mit der Materialhäufung **25.** Im Nachtrocknungscontainerboden **29** befinden sich drei Fördersysteme **27** und **28.** Die beiden außen liegenden Fördersysteme **27** haben die Aufgabe, den im Container **29** angehäufte Klärschlamm **25** zu mischen und zu entleeren. Zwischen den beiden äußeren Fördersystemen **27** befindet sich ein trapezförmiges Sieb **39,** durch das die Umluft **26** im Container **29** angehäuften Klärschlamm **25** durchströmt. Durch den trapezförmigen Aufbau des Siebes **39** ist es möglich, dass die Umluft **26** besser mit dem angehäuften Klärschlamm **25** in Kontakt kommt. Unterhalb des trapezförmigen Siebbodens sind mehrere Rüttler **40** installiert. Durch die Bewegungen **36** und **37** der Fördersysteme **27** und der Rüttler **40** wird der im Container angehäufte Klärschlamm mit einem abgestimmten Steuerungsprogramm optimal gemischt. Dadurch kommt die Umluft **26** besser in Berührung mit dem angehäuften Klärschlamm **25.** In der Mitte des Containers zwischen den äußeren Fördersystemen **27** befindet sich noch ein Fördersystem **28,** das jeweils mit schrägen Blechteilen **59** an den Enden des trapezförmigen Siebes **39** montiert ist. Die Aufgabe des Fördersystems **28** besteht darin, in der Umluft vorhandenen Staub und Leichtstoffe abzufangen und mit einem bestimmten Steuerprogramm vom System zu entfernen.

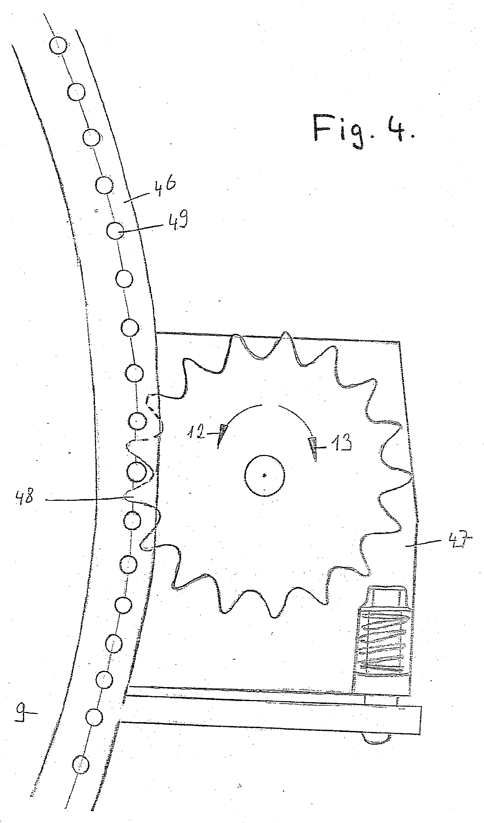

**Fig. 4** zeigt die Drehvorrichtung des Trommelmischers **9,** auf der sich der Trommelmischer **9** bewegt. Die Drehrichtung des Trommelmischers **9** wird durch zwei Zahnräder **48** bestimmt. Im Außenbereich - in der Mitte des Trommelmischers **9 -** befindet sich um den Trommelmischer **9** herum ein Ring **46,** der in bestimmten Abständen mit Bolzen **49** versehen ist. Jeweils ein Motor **47** befindet sich an jedem Zahnrad **48,** das durch ein bestimmtes Steuerungsprogramm läuft. Mit dieser Vorrichtung kann der Trommelmischer **9** problemlos und robust in abgestimmter Schnelligkeit in die Trocknungsrichtung **12** und Entleerrichtung **13** gedreht werden.

Bei dem vorliegenden Ausführungsbeispiel wird ein Trocknungssystem, bei dem ein besonders großer Vorteil darin besteht, eine kontrollierte Trocknung durchzuführen, vorgestellt. Der entwässerte Klärschlamm **55** wird mit einem Fördersystem **20** in den Trommelmischer **9** gefördert. Das Gewicht wird mittels der Messdosen **32** ermittelt. Die Durchführung bzw. die Beobachtung der kontrollierten Trocknung wird an drei Messstellen **33, 34** und **35** überwacht und automatisch registriert. Vor dem Trommelmischer **9** befindet sich eine Messstelle **34** (Messstelle vor dem Trommelmischer **9**), an der die Luftmenge, die Lufttemperatur und die Luftfeuchtigkeit gemessen werden. Nach dem Trommelmischer **9** ist die zweite Messstelle **33** (Messstelle nach dem Trommelmischer **9**), an der die Luftmenge, die Lufttemperatur und die Luftfeuchtigkeit ermittelt werden, im Umluftrohr installiert. Die dritte und letzte Messstelle **35** (Messstelle am Container-Ausgang), an der die Luftmenge, die Lufttemperatur und die Luftfeuchtigkeit gemessen werden, befindet sich nach dem Nachtrocknungscontainer **29** im Ablaufrohr. Die Messungen werden mit einem Steuerungsprogramm miteinander verglichen. Durch den Vergleich wird der Trockensubstanzgehalt (TS-Gehalt) in % bestimmt.

### Bezugszeichenliste

- 1: Luft, insbesondere Prozessluft
- 2: Energiequelle: BHKW-Abwärme
- 3: Energiequelle: Mikrogasturbine
- 4: Energiequelle: Heizwasser
- 5: Energiequelle: Solarkollektor
- 6: Energiequelle: Gasbrenner
- 7: Energiequelle: Prozessabwärme
- 8: Energiequelle: Abwasserwärme
- 9: Trommelmischer bzw. Trockenmischer
- 10: blindes Ende der Luftverteilervorrichtung
- 11: Spiralbleche
- 12: Mischrichtung
- 13: Entleerrichtung
- 14: Luftverteilersysteme, z. B. Düsen oder Öffnungen
- 15: ein (erster) Teil der aufgewärmten Prozessluft
- 16: durch die Doppelwand hinein geblasene Luft
- 17: teils (teilweise) getrockneter Klärschlamm
- 18: Umluftbereich
- 19: Umluft
- 20: Fördersystem
- 21: Luftvorrichtung
- 22: Gebläse
- 23: Ventilator
- 25: getrockneter Klärschlamm
- 26: Umluft im Container
- 27: Fördersystem
- 28: Fördersystem
- 29: isolierter Container
- 30: Fördersystem
- 31: Schieber
- 32: Messdosen
- 33: Messstelle nach dem Trommelmischer
- 34: Messstelle vor dem Trommelmischer
- 35: Messstelle Container-Ausgang
- 36: Bewegung des Fördersystems
- 37: Bewegung des Fördersystems
- 38: Bewegung des Fördersystems
- 39: trapezförmiges Sieb
- 40: Rüttler
- 41: Doppelwand, insbesondere in der Ausgestaltung einer Wand als Sieb
- 42: Filter
- 43: freigesetzte Abluft
- 44: Entleerungsvorrichtung
- 45: Schieber
- 46: Ring
- 47: Motor
- 48: Zahnrad
- 49: Bolzen
- 50: Luftleitung zum Wärmetauscher
- 51: Luftleitung zum Belebungsbecken
- 53: Gebläse
- 54: Außenluft/Zuluft
- 55: entwässerter Klärschlamm
- 56: Entwässerungssystem
- 57: Fördersystem
- 58: granulierter Klärschlamm
- 59: Blechteile
- 60: Gebläseraum
- 61: durch Strahlungswärme der Gebläse vorgewärmter Sekundärluftstrom
- 62: Wärmetauscher, insbesondere des Typs Luft/Luft
- 63: Pumpenschacht
- 64: Filterplattenwärmtauscher
- 65: Wärmepumpe
- 66: Speicher
- 67: Wärmetauscher, insbesondere des Typs Wasser/Luft
- 68: Vorfluter
- 69: Nachklärbecken
- 70: Belebungsbecken
- 71: Primärluftstrom
- 72: Abluft zum Fördersystem
- 73: Luftverteilervorrichtung im Trommelmischer
- 75: Steuervorrichtung
- 100, 100': Trocknungsanlage

## Patentansprüche

1. Trocknungsanlage (100, 100'), in der zumindest ein Trommelmischer (9) doppelwandig ausgeführt ist und die zum Trocknen von organischen Feststoffen mit einem Flüssigkeitsanteil dient,
wobei der Trommelmischer (9) Aufnahmemittel (41, 57) zur Aufnahme des organischen Feststoffes hat und die Trocknungsanlage (100, 100') Luft (1) als Medium für das Trocknen aufnimmt, **dadurch gekennzeichnet, dass** die Trocknungsanlage (100, 100') einen Luftzugang (14) hat, über den die Luft (1) mittels eines Luftfördermittels (22, 23) dem Trommelmischer (9) zur Verfügung stellbar ist und dessen Öffnung in eine Umgebung der Trocknungsanlage (100, 100') gerichtet ist, damit die Luft aus der Umgebung der Trocknungsanlage (100, 100') entzogen wird, wobei die Luft des Luftzugangs (14) über eine Kombination von den folgenden Energiequellen geführt wird, sodass aus der Luft (1) eine Prozessluft wird, die teilweise durch ein Sieb (41) des Trommelmischers (9) geblasen wird:
• Gebläsedruckluftenergie aus Kläranlagen oder
• Abwasserwärmenutzung aus dem gereinigten Abwasser aus Kläranlagen (8)
und mindestens eine der folgenden Energiequellen
• Blockheizkraftwerk und Mikrogasturbine (2, 3)
• Heizwasser (4)
• Gasbrenner (6)
• Solarkollektoren (5)
• Prozessabwärme aus einer Produktion oder aus einem thermischen Prozess (7).
**dadurch gekennzeichnet, dass** in der Trocknungsanlage (100, 100') mehrere Stufen vorhanden sind, damit ein Trocknungsprozess in wenigstens drei Schritten vollzogen werden kann:
a) Vortrocknung mittels einer Schneckentrocknung,
b) Haupttrocknung mittels des Trommelmischers (9), der eine Entleerungsvorrichtung (44) mit einer Klappe oder einem ersten Schieber (45) zur Entleerung in eine Nachtrocknung aufweist, wobei unter der Entleerungsvorrichtung (44) ein erstes Fördersystem (30) und darunter ein einstellbarer zweiter Schieber (31) angeordnet sind, und
c) Nachtrocknung,
wobei die Nachtrocknung in einem isolierten Container (29) erfolgt, der zwei jeweils am Außenrand seines Containerbodens angeordnete zweite Fördersysteme (27) und ein zwischen den beiden zweiten Fördersystemen (27) angeordnetes trapezförmiges Sieb (39) mit mehreren Rüttlern (40) aufweist, durch das Umluft (26) im Container (29) angehäuften Klärschlamm (25) durchströmt, wobei ein drittes Fördersystem (28) unterhalb des trapezförmigen Siebes (39) mit schrägen Blechteilen (59) an den Enden des trapezförmigen Siebes (39) montiert ist, wobei eine Steuervorrichtung (75) vorgesehen ist, die auf die Schieber (31, 45), die Entleerungsvorrichtung (44) und die Fördersysteme (27, 28, 30) einwirken kann.

2. Trocknungsanlage (100, 100') nach Anspruch 1, **dadurch gekennzeichnet, dass** sie zum Trocknen
- von Klärschlämmen aus öffentlichen, kommunalen und industriellen Abwasserreinigungsanlagen (Kläranlagen),
- von Biomassen (Holzhackschnitzel, Sägespäne, Grünschnitte, Biertreber, Obsttrester, Gärreste, Futtermittel und Küchen- und Gemüseabfallreste),
- von Produktionsrückständen (aller Art),
- von Aufbereitungsreststoffen (aller Art) und/oder
- von nassen Granulaten (aller Art),
mit einem Flüssigkeitsanteil von mehr als 50 Gewichtsprozenten Flüssigkeitsanteil, dient,
dass das Aufnahmemittel ein Sieb (39) ist, dass die Luft des Luftzugangs (14) mittels einer Verrohrung über eine Kombination der Energiequellen geführt wird, und dass die Prozessabwärme aus Verbrennungsanlagen und/oder Zementwerken und/oder Pyrolyseanlagen und/oder Biogasanlagen stammt.

3. Trocknungsanlage (100, 100') nach einem der vorhergehenden Ansprüche, **dadurch gekennzeichnet, dass** der Trommelmischer (9) einen Drehmechanismus aufweist, wobei aufgrund einer Berührung zwischen dem wenigstens einen Zahnrad (48) und dem wenigstens einen Bolzen (49) ein Drehen einer Trommel des Trommelmischers (9) ermöglicht wird.

4. Trocknungsanlage (100, 100') nach einem der vorhergehenden Ansprüche, **dadurch gekennzeichnet, dass** die Trocknungsanlage (100, 100') eine Steuervorrichtung (75) umfasst, wobei die Pausenzeiten an Materialeigenschaften des organischen Feststoffs angepasst werden.

5. Trocknungsanlage (100, 100') nach einem der vorhergehenden Ansprüche, **dadurch gekennzeichnet, dass** die Trocknungsanlage (100, 100') wenigstens eine Messdose (32, 33, 34, 35) umfasst, von denen wenigstens eine Messdose (32, 33, 34, 35) zur Messaufnahme eines Parameters des Trommelmischers (9) installiert ist, wodurch eine Füllmenge und/oder ein Gesamtgewicht des zu trocknenden organischen Feststoffs in dem Trommelmischer (9) bestimmbar ist.

6. Trocknungsanlage (100, 100') nach einem der vorhergehenden Ansprüche, **dadurch gekennzeichnet, dass** die Trocknungsanlage (100, 100') Messstellen (33, 34, 35) aufweist, über die eine Luftmenge, eine Lufttemperatur und/oder eine Luftfeuchtigkeit messbar sind.

7. Trocknungsanlage (100, 100') nach einem der vorhergehenden Ansprüche, **dadurch gekennzeichnet, dass** die Luft (1) durch den doppelwandigen Trommelmischer (9) geführt wird, wobei die Luft (1) zum einen direkt auf den zu trocknenden Feststoff und zum anderen unterhalb des zu trocknenden Feststoffs geleitet wird.

8. Trocknungsanlage (100, 100') nach einem der vorhergehenden Ansprüche, **dadurch gekennzeichnet, dass** in dem Trommelmischer (9) eine Luftverteiler-Vorrichtung (21) angeordnet ist, wobei Öffnungen der Luftverteiler-Vorrichtung (21) entlang einer Breite von einer Öffnung des Trommelmischers (9) bis zu einem Ende des Trommelmischers (9) reichen.

9. Trocknungsanlage (100, 100') nach einem der vorhergehenden Ansprüche, **dadurch gekennzeichnet, dass** in der Trocknungsanlage (100, 100'), ein Filtersystem (42) vorgesehen ist, durch das in der Luft vorhandener Staub und Leichtstoffe abfangbar sind.

10. Verfahren zur Trocknung eines organischen Feststoffs bei dem zumindest ein Teil der Trocknung in einem Trommelmischer (9) erfolgt, der doppelwandig aufgebaut ist, wodurch Prozessluft (1), die als Umgebungsluft einer Umgebung der Trocknungsanlage (100, 100') entzogen worden ist, zur Trocknung sowohl als Medium zur Kontakttrocknung wie auch als Medium zur Direkttrocknung nutzbar ist, wobei die Umgebungsluft vor einer Einleitung als Prozessluft (1) in den Trommelmischer (9) über eine Kombination der nachfolgenden Energiequellen geleitet worden ist und teilweise durch ein Sieb (41) des Trommelmischers (9) geblasen wird:
- Gebläsedruckluftenergie oder
- Abwasserwärmenutzug aus dem gereinigten Abwasser aus Kläranlagen (8), und mindestens eine der folgenden Energiequellen
- Blockheizkraftwerk und Mikrogasturbine (2, 3),
- Heizwasser (4),
- Gasbrenner (6),
- Solarkollektoren (5),
- Prozessabwärme aus einer Produktion oder aus einem thermischen Prozess (7),
**dadurch gekennzeichnet, dass** ein Trocknungsprozess in wenigstens drei Schritten vollzogen werden kann:
a) Vortrocknung mittels einer Schneckentrocknung,
b) Haupttrocknung mittels des Trommelmischers (9), der eine Entleerungsvorrichtung (44) mit einer Klappe oder einem ersten Schieber (45) zur Entleerung in eine Nachtrocknung aufweist, wobei unter der Entleerungsvorrichtung (44) ein erstes Fördersystem (30) und darunter ein einstellbarer zweiter Schieber (31) angeordnet sind, und
c) Nachtrocknung,
wobei die Nachtrocknung in einem isolierten Container (29) erfolgt, in dem
- Klärschlamm mittels zwei jeweils am Außenrand des Containerbodens angeordneter zweiter Fördersysteme (27) gemischt und entleert wird,
- Umluft (26) im Container (29) angehäuften Klärschlamm (25) durch ein zwischen den beiden zweiten Fördersystemen (27) angeordnetes trapezförmiges Sieb (39) mit mehreren Rüttlern (40) durchströmt, und
- Staub und Leichtstoffe von einem dritten Fördersystem (28), das mit schrägen Blechteilen (59) an den Enden des trapezförmigen Siebes (39) montiert ist, unterhalb des trapezförmigen Siebes (39) abgefangen und entfernt werden,
wobei eine Steuervorrichtung (75) auf die Schieber (31, 45), die Entleerungsvorrichtung (44) und die Fördersysteme (27, 28, 30) einwirkt.

11. Verfahren nach Anspruch 10, **dadurch gekennzeichnet, dass** der Trommelmischer (9) mittels einer Steuervorrichtung (75) in seiner Bewegung in Abhängigkeit von Materialeigenschaften des Feststoffs verändert wird.

## Claims

1. Drying plant (100, 100') in which at least one drum mixer (9) is designed to be doubled-walled and which serves to dry organic solids with a liquid proportion,
wherein the drum mixer (9) has deceiving means (41, 57) to receive the organic solid and the drying plant (100, 100') receives air (1) as a medium for the drying, **characterised in that** the drying plant (100, 100') has an air access (14) via which the air (1) is able to be provided to the drum mixer (9) by means of an air conveyor (22, 23) and the opening thereof is directed into a surrounding environment of the drying plant (100, 100') so that the air is extracted from the surrounding environment of the drying plant (100, 100'), wherein the air of the air access (14) is guided via a combination of the following energy sources, such that a process air is obtained from the air (1), said process air being partially blown through a sieve (41) of the drum mixer (9):
• blower compressed air energy from sewage treatment plants or
• wastewater heat use from the purified wastewater from sewage treatment plants (8)
and at least one of the following energy sources
• combined heat and power station and micro gas turbine (2, 3)
• heating water (4)
• gas burner (6)
• solar collectors (5)
• waste process heat from a production or from a thermal process (7)
**characterised in that** several levels are present in the drying plant (100, 100') so that a drying process can be carried out in at least three steps:
a) pre-drying by means of screw drying
b) main drying by means of the drum mixer (9) which has a draining device (44) with a flap or a first slider (45) for draining into post-drying, wherein a first conveyor system (30) is arranged below the draining device (44), and an adjustable second slider (31) is arranged under this, and
c) post-dying
wherein the post-drying occurs in an insulated container (29) which has two second conveyor systems (27) arranged respectively on the outer edge of its container base and a trapezoidal, sieve (39), which is arranged between the two second conveyor systems (27), having several shakers (40), through which circulating air (26) flows through sewage sludge (25) accumulated in the container (29), wherein a third conveyor system (28) is assembled with sloping sheet metal parts (59) beneath the trapezoidal sieve (39) at the ends of the trapezoidal sieve (39), wherein a control device (75) is provided which can operate the sliders (31, 45), the draining device (44) and the conveyor systems (27, 28, 30).

2. Drying plant (100, 100') according to claim.1, **characterised in that** it serves to dry
- sewage sludge from public, communal and industrial wastewater treatment plants (sewage treatment plants),
- biomasses (wood chips, wood shavings, green waste, spent grain, pomance, fermentation residues, animal feed and kitchen and vegetable waste),
- production residues (of all types)
- processing residues (of all types) and/or
- wet granulates (of all types),
having a liquid proportion of more than 50 percent by weight of liquid proportion;
the receiving means is a sieve (39), the air of the air access (14) is guided via a combination of energy sources by means of piping, and the waste process heat originates from incineration plants and/or cement plants and/or pyrolysis plants and/or biogas plants.

3. Drying plant (100, 100') according to one of the preceding claims, **characterised in that** the drum mixer (9) has a rotation mechanism, wherein a rotation of a drum of the drum mixer (9) is enabled due to contact between the at least one gearwheel (48) and the at least one bolt (49).

4. Drying plant (100, 100') according to one of the preceding claims, **characterised in that** the drying plant (100, 100') comprises a control device (75), wherein the break times are adapted to material properties of the organic solid.

5. Drying plant (100, 100') according to one of the preceding claims, **characterised in that** the drying plant (100, 100') comprises at least one load cell (32, 33, 34, 35), of which at least one load cell (32, 33, 34, 35) is installed for the measured receiving of a parameter of the drum mixer (9), whereby a filling quantity and/or a total weight of the organic solid to be dried is able to be determined in the drum mixer (9).

6. Drying plant (100, 100') according to one of the preceding claims, **characterised in that** the drying plant (100, 100') has measurement points (33, 34, 35) via which an air quantity, an air temperature and/or an air humidity are able to be measured.

7. Drying plant (100, 100') according to one of the preceding claims, **characterised in that** the air (1) is guided through the double-walled drum mixer (9), wherein the air (1) is led, on the one hand, directly to the solid to be dried and, on the other hand, beneath the solid to be dried.

8. Drying plant (100, 100') according to one of the preceding claims, **characterised in that** an air distributor device (21) is arranged in the drum mixer (9), wherein openings of the air distributor device (21) reach along a width of an opening of the drum mixer (9) up to an end of the drum mixer (9).

9. Drying plant (100, 100') according to one of the preceding claims, **characterised in that** a filter system (42) is provided in the drying plant (100, 100'), through which dust and light material present in the air are able to be caught.

10. Method for drying an organic solid for which at least one part of the drying occurs in a drum mixer (9) which is designed to be double-walled, whereby process air (1) which has been extracted as environmental air of a surrounding environment of the drying plant (100, 100') is able to be used for drying both as a medium for contact drying and as a medium for direct drying, wherein the environmental air has been led via a combination of the following energy sources before an introduction as process air (1) into the drum mixer (9) and is partially blown through a sieve (41) of the drum mixer (9):
- blower compressed air energy or
- wastewater heat use from the purified wastewater from sewage treatment plants (8)
and at least one of the following energy sources
- combined heat and power station and micro gas turbine (2, 3)
- heating water (4)
- gas burner (6)
- solar collectors (5)
- waste process heat from a production or from a thermal process (7),
**characterised in that** a drying process can be carried out in at least three steps:
a) pre-drying by means of screw drying
b) main drying by means of the drum mixer (9) which has a draining device (44) with a flap or a first slider (45) for draining into post-drying, wherein a first conveyor system (30) is arranged below the draining device (44), and an adjustable second slider (31) is arranged under this, and
c) post-drying
wherein the post-drying occurs in an insulated container (29) in which
- sewage sludge is mixed and drained by means of two second conveyor systems (27) arranged respectively on the outer edge of the container base,
- circulating air (26) flows through sewage sludge (25) accumulated in the container (29) through a trapezoidal sieve (39) which is arranged between the two second conveyor systems (27), having several shakers (40), sand
- dust and light material are caught and removed by a third conveyor system (28), which is mounted with sloping sheet metal parts (59) at the ends of the trapezoidal sieve (39), below the trapezoidal sieve (39),
wherein a control device (75) operates the slider (31, 45), the draining device (44) and the conveyor systems (27, 28, 30).

11. Method according to claim 10, **characterised in that** the drum mixer (9) is changed in terms of its movement depending on material properties of the solid by means of a control device (75).

## Revendications

1. Installation de séchage (100, 100') dans laquelle au moins un mélangeur à tambour (9) est réalisé à double parois et sert à sécher des matières solides organiques ayant une proportion de liquide,
dans laquelle
le mélangeur à tambour (9) est équipé de moyens de réception (41, 57) des matières solides organiques, et l'installation de séchage (100, 100') reçoit de l'air (1) en tant que milieu de séchage,
**caractérisée en ce que**
l'installation de séchage (100, 100') comprend une arrivée d'air (14) par l'intermédiaire de laquelle l'air (1) peut être fourmi au mélangeur à tambour (9) par des moyens de convoyeur aérien (22, 23) et dont l'ouverture est orientée au environs de l'installation de séchage (100, 100') de sorte que l'air soit soutiré au environs de l'installation de séchage (100, 100'), l'air de l'arrivée d'air (14) étant transféré sur une combinaison des sources d'énergie suivantes de façon à obtenir à partir de l'air (1) un air de process qui est partiellement souffle au travers d'un tamis (41) du mélangeur à tambour (9) :
- énergie d'air comprimé de soufflet provenant d'installations d'épuration d'eaux résiduaires, et
- utilisation de la chaleur d'eaux, usées provant d'eaux usées purifiées d'installations d'épuration d'eaux résiduaires (8),
et au moins une des sources d'énergie suivantes
- centrale de cogénération et micro-turbines à gaz (2, 3),
- eau de chauffage (4),
- bruleur à gaz (6),
- collecteurs solaires (5),
- chaleur résiduelle de process provenant de la production ou d'un process thermique (7),
**caractérisée en ce que**
dans l'installation de séchage (100, 100') il est prévu plusieurs étages de sorte qu'un process de séchage puisse être exécuté en au moins trois étapes :
a) préséchage par séchage par vis sans fin,
b) séchage principal au moyen du mélangeur à tambour (9) qui comprend un dispositif de vidange (44) équipé d'un volet ou d'une première vanne (45) pour permettre la vidange vers un post-séchage, selon lequelle au-dessous du dispositif de vidange (44) sont montés un premier système de convoyage (30) et au-dessous une seconde vanne réglable (31), et
c) post-séchage,
installation dans laquelle
le post-séchage est effectué dans une réceptacle isolé (29) qui comporte deux seconds systèmes de convoyage (27) respectivement montés sur le bord externe du fond du réceptacle, et un tamis trapézoïdal (39) équipé de plusieurs secoueurs (40) montés entre les deux seconds systèmes de convoyage (27), au travers duquel l'air en circulation passe au travers des boues d'épuration (25) accumulées dans le réceptacle (29), un troisième système de convoyage (28) est monté au-dessous du tamis trapézoïdal (39) et est équipé d'éléments en tôle obliques (59) aux extrémités du tamis trapézoïdal (39), et il est prévu un dispositif de commande (75) pouvant agir sur les vannes (31, 45), le dispositif de vidange (44) et les systèmes de convoyage (27, 28, 29).

2. Installation de séchage (100, 100') conforme à la revendication 1, **caractérisée en ce qu'**
elle sert à sécher :
des boues d'épuration provenant d'installations d'épuration d'eaux usées domestiques communales et industrielles (installations d'épuration d'eaux résiduaires),
- de biomasses (copeaux de bois, sciure de bois, déchets de jardin, drêches de brasseries, marc de fruits, résidus de fermentation, aliments pour animaux et résidus de déchets de cuisine ou de déchets végétaux),
- de résidus de production (de tout type),
- de résidus de traitement (de tout type) et/ou
- de granulés humides (de tout type),
ayant une proportion de liquide supérieur à 50% en poids, de proportion de liquide,
les moyens de réception sont constitués par un tamis (39), l'air de l'arrivée d'air (14) est transféré au moyen d'une tubulure sur une combinaison de sources d'énergie, et, la chaleur résiduelle du process est issue d'installations de combustion et/ou de cimenteries et/ou d'installations de pyrolyse et/ou d'installation de biogaz.

3. Installation de séchage (100, 100') conforme à l'une des revendications précédentes,
**caractérisée en ce que**
le mélangeur à tambour (9) comprend un mécanisme de rotation, selon lequel une rotation du tambour du mélangeur à tambour (9) est permet en raison d'un contact entre au moins une roue dentée (48) et au moins un goujon (49) permuttant.

4. Installation de séchage (100, 100') conforme à l'une des revendications précédentes,
**caractérisée en ce que**
l'installation de séchage (100, 100') comprend un dispositif de commande (75), dans lequel les temps de passe étant adaptées aux propriétés des matières solides organiques.

5. Installation de séchage (100, 100') conforme à l'une des revendications précédentes,
**caractérisée en ce que**
l'installation de séchage (100, 100') comprend au moins une boîte de mesure (32, 33, 34, 35), dont au moins une boîte de mesure (32, 33, 34, 35) étant installée pour prendre la mesure d'un paramètre du mélangeur à tambour (9), de façon à pouvoir déterminer le niveau et/ou le poids total des matières solides organiques devant être séchées dans le mélangeur à tambour (9).

6. Installation de séchage 100') conforme à l'une des revendications précédentes,
**caractérisée en ce que**
l'installation de séchage (100, 100') comprend des emplacements de mesure (33, 34, 35), au niveau desquels la quantité d'air, la température de l'air et/ou l'humidité de l'air peut(peuvent) être mesurée(s).

7. Installation de séchage (100, 100') conforme à l'une des revendications précédentes,
**caractérisée en ce que**
l'air (1) circule au travers du mélangeur à tambour à double parois (9), cet air (1) étant dirigé d'une part directement sur les matières solides à sécher et d'autre part, au-dessous des matières solides à sécher.

8. Installation de séchage (100, 100') conforme à l'une des revendications précédentes,
**caractérisée en ce qu'**
un dispositif diffuseur d'air (21) est monté dans le mélangeur à tambour (9), des ouvertures de ce dispositif diffuseur d'air (21) s'étendant le long d'une largeur d'une ouverture du mélangeur à tambour (9) jusqu'à une extrémité de ce mélangeur à tambour (9).

9. Installation de séchage (100, 100') conforme à l'une des revendications précédentes,
**caractérisée en ce qu'**
il est prévu dans l'installation de séchage (100, 100') un système de filtration (42) par l'intermédiaire duquel la poussière et les substances légeres présents dans l'air peuvent être captés.

10. Procédé permettant de sécher des matières solides organiques selon lequel au moins une partie du séchage est effectuée dans une mélangeur à tambour (9) à double parois dans lequel de l'air de process (1) ayant été soutiré en tant qu'air de l'environnement de l'installation de séchage (100, 100') peut être utilisé pour le séchage en tant qu'agent de séchage par contact, et étalement en tant qu'agent de séchage direct, l'air de l'environnement ayant été dirigé avant son introduction en tant qu'air de process (1) dans le mélangeur à tambour (9) sur une combinaison des sources d'énergie suivantes, et étant partiellement soufflé au travers d'un tamis (41) du mélangeur à tambour (9)
énergie d'air comprise de soufflet ou
- utilisation de la chaleur d'eaux usées provenant d'eaux usée purifiées d'installation d'épuration d'eaux résiduaires (8),
et au moins une des sources d'énergie suivantes :
- cetrale de cogénération et microturbines à gaz (2, 3),
- eau de chauffage (4),
- brûleur à gaz (6),
- capteur solaire (5),
- chaleur résiduelle de process provenant de la production ou d'un process thermique (7),
**caractérisé en ce que**
le process de séchage peut être exécuté en au moins trois étapes :
a) préséchage par séchage par vis sans fin,
b) séchage principal au moyen du mélangeur à tambour (9) qui comporte un dispositif de vidange (44) équipé d'un volet ou d'une première vanne (45) pour permettre la vidange vers un post-séchage, selon laquelle au-dessous du dispositif de vidange (44) étant monté un premier système de convoyage (30) et au-dessous de celui-ci une seconde vanne réglable (31), et
c) post-séchage,
procédé selon lequel
le post séchage est effectué dans un réceptacle isolé (29) dans lequel :
- les boues d'épuration sont mélangées et évacuées au moyen de deux seconds systèmes de convoyage (27) respectivement montés sur le bord externe du fond du réceptacle,
- de l'air en circulation (26) passe au travers des boues d'épuration (25) accumulées dans le réceptacle (29) au travers d'un tamis (39) de forme trapézoïdale équipé de plusieurs secoueurs (40) montés entre les deux seconds systèmes de convoyage (27), et
- la poussière et les produits légers sont captés et vidange au-dessous du tamis de forme trapézoïdale (39) par un troisième système de convoyage (28) qui est équipé de pièces en tôles obliques (59) montées aux extrémités du tamis de forme trapézoïdale (39),
un dispositif de commande (75) agit sur les vannes (31, 45), le dispositif de vidange (44) et les systèmes de convoyage (27, 28, 30).

11. Procédé conforme à la revendications 10,
**caractérise en ce que**
le mouvement du mélangeur à tambour (9) est modifié en fonction des propriétés des matières solides au moyen du dispositif de commande (75).
